# EUROPEAN PATENT APPLICATION

(11) **EP 4 807 938 A1**
(43) Date of publication of application: **16.09.2026**
(21) Application number: 24890825.3
(22) Date of filing: 15.11.2024
(51) Int. Cl.: H02J 3/38, H02J 3/32, H02M 7/5395

(54) **NEW-ENERGY ENERGY STORAGE SUB-MODULE AND OPERATION METHOD THEREFOR, AND ENERGY STORAGE SYSTEM AND OPERATION METHOD THEREFOR**

(30) Priority: 15.11.2023 CN 202311526165
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: YU, Dongxu, Shanghai 200241 (CN); XU, Xiangxiang, Shanghai 200241 (CN); LIANG, Liliuyuan, Shanghai 200241 (CN); PENG, Hao, Shanghai 200241 (CN); ZONG, Yanyun, Shanghai 200241 (CN); WEI, Chao, Shanghai 200241 (CN)
(74) Representative: Gong, Jinping
(86) International application number: PCT/CN2024/132354
(87) International publication number: WO 2025/103473

(57) **Abstract**

A new energy storage submodule and an operation method thereof, an energy storage valve, and an energy storage system and an operation method thereof. In a new energy grid-connected system, new energy assemblies are distributedly arranged in sub-modules to form a new energy storage submodule including a direct current bus, a power module, an energy storage module, a first converter, and a new energy assembly. The new energy assembly is connected to an energy storage system in the form of new energy storage submodule for operation. Modularizing the new energy assembly can reduce the impact of a single failure of a new energy assembly on a new energy grid-connected system. That is, in the case that a single new energy assembly fails, the new energy storage submodule where the failed new energy assembly is located can be removed, reducing the impact on the operation of other new energy assemblies, and increasing the proportion of operation time of the new energy grid-connected system, thereby effectively improving the system availability of the new energy grid-connected system.

## Description

### CROSS-REFERENCE

This application incorporates the Chinese Patent Application No. 202311526165.8 filed on November 15, 2023, and entitled "NEW ENERGY STORAGE SUBMODULE AND OPERATION METHOD THEREOF, AND ENERGY STORAGE SYSTEM AND OPERATION METHOD THEREOF", which is incorporated by reference in its entirety.

### TECHNICAL FIELD

This application relates to the field of energy storage technology, and in particular to a new energy storage submodule and an operation method thereof, an energy storage valve, and an energy storage system and an operation method thereof.

### BACKGROUND

With the development of new energy technology and energy storage technology, the grid-connected operation of new energy power generation modules and energy storage systems has gradually developed. New energy power generation has been widely used due to advantages such as being clean and pollution-free, short construction period, long service life, and low maintenance costs. A new energy grid-connected system generally converts direct current output from new energy assemblies into alternating current through a new energy inverter, then boosts the current through a transformer to reach the grid voltage, and transmits the current to the alternating current grid.

However, in the related art, when a new energy assembly fails, a new energy grid-connected system stops operating, resulting in low system availability of the new energy grid-connected system.

### SUMMARY

In view of this, it is necessary to provide a new energy storage submodule and an operation method thereof, an energy storage valve, and an energy storage system and an operation method thereof to improve the system availability of the new energy grid-connected system.

The new energy storage submodule provided by embodiments of this application includes a direct current bus, a power module, an energy storage module, a first converter and a new energy assembly, the power module includes a grid connection side and a direct current side, the grid connection side of the power module is configured to cascade with an adjacent new energy storage submodule, the energy storage module is connected to the direct current side of the power module through the direct current bus, the first converter is connected to the direct current bus, and the new energy assembly is connected to the first converter.

In the above solution, in the new energy grid-connected system, the new energy assemblies are distributedly arranged in all submodules to form a new energy storage submodule including the direct current bus, the power module, the energy storage module, the first converter and the new energy assembly, and the new energy assembly is connected to the energy storage system in the form of new energy storage submodule for operation. Through this solution, the new energy assemblies are distributedly arranged in all the new energy storage submodules, modularizing the new energy assemblies, which has good flexibility, and can reduce the impact of a single failure of a new energy assembly on a new energy grid-connected system. That is, in the case that a single new energy assembly fails, the new energy storage submodule where the failed new energy assembly is located can be removed, reducing the impact on the operation of other new energy assemblies, and increasing the proportion of operation time of the new energy grid-connected system, thereby effectively improving the system availability of the new energy grid-connected system.

In some embodiments, the new energy storage submodule further includes a second converter, and the second converter is arranged between the direct current bus and the energy storage module, and connected to both the direct current bus and the energy storage module.

In the above solution, the second converter is further arranged between the direct current bus and the energy storage module, and direct current voltage conversion during charging and discharging can be achieved through the second converter to meet the charging and discharging requirements of the energy storage module.

In some embodiments, the second converter includes a bidirectional non-isolated direct current converter or a bidirectional isolated direct current converter.

In the above solution, the second converter can be set as a bidirectional non-isolated direct current converter or a bidirectional isolated direct current converter, which can be selected according to actual scenarios and has high setting flexibility.

In some embodiments, the new energy storage submodule further includes an insulation support assembly, and the new energy assembly is arranged on the insulation support assembly.

In the above solution, the new energy assembly is arranged on the insulation support assembly, and voltage isolation is performed through the insulation support assembly to improve the operation reliability of the new energy assembly.

In some embodiments, the first converter includes a non-isolated direct current converter.

In the above solution, in the case that the new energy assembly performs voltage isolation through the insulation support assembly, the first converter between the new energy assembly and the direct current bus directly uses a non-isolated direct current converter, which can effectively reduce costs.

In some embodiments, the first converter includes an isolated direct current converter.

In the above solution, the first converter between the new energy assembly and the direct current bus uses an isolated direct current converter, and high-voltage isolation of the new energy assembly can be achieved through the isolation converter, so that the new energy assembly can be set up without the insulation support assembly, improving the setup convenience of the new energy storage submodule.

In some embodiments, the new energy storage submodule further includes a third converter, and the third converter is arranged between the direct current bus and the power module, and connected to both the direct current bus and the direct current side of the power module.

In the above solution, the energy storage module is connected to the third converter through the direct current bus, so that the new energy assembly is directly connected between the third converter and the energy storage module, and the electric energy generated by the new energy assembly can be transmitted to the energy storage module without passing through the third converter, which can effectively improve the electric energy transmission efficiency.

In some embodiments, the new energy assembly includes a photovoltaic assembly.

In the above solution, the new energy assembly specifically uses a photovoltaic assembly, improving the power generation operation stability of the new energy storage submodule.

The embodiments of this application further provide an operation method based on the above new energy storage submodule, including: in a case that an electric energy storage condition is satisfied, converting electric energy output by the new energy assembly through the first converter and then transmitting it to the energy storage module for storage; and in a case that an electric energy supply condition is satisfied, converting electric energy output by the new energy assembly through the first converter and the power module and then transmitting it to a grid for load power supply.

In the above solution, the electric energy generated by the new energy assembly can be transmitted, according to actual conditions, to the energy storage module for storage and/or to be transmitted to a grid that is a load for load power supply, thereby reducing the situation where the electric energy generated by the new energy assembly is wasted and improving the electric energy utilization rate of the new energy assembly.

In some embodiments, the operation method of the new energy storage submodule further includes: acquiring output electrical parameters of the new energy assembly; determining a target output voltage of the new energy assembly during maximum power operation according to the output electrical parameters; and controlling the operation of the first converter according to the output electrical parameters and the target output voltage.

In the above solution, the output electrical parameters of the new energy assembly can be combined to allow the new energy assembly to continue operating at maximum power, improving the operation efficiency of the new energy assembly.

In some embodiments, the output electrical parameters include output voltage and output current, and the determining a target output voltage of the new energy assembly during maximum power operation according to the output electrical parameters includes: performing maximum power point tracking control according to the output voltage and the output current to determine the target output voltage of the new energy assembly during maximum power operation; and the controlling operation of the first converter according to the output electrical parameters and the target output voltage includes: controlling operation of the first converter according to the output voltage and the target output voltage.

In the above solution, maximum power point tracking control can be performed in combination with the output current and output voltage of the new energy assembly, thereby determining the target output voltage of the new energy assembly during maximum power operation, and improving the control accuracy of the new energy assembly operating at maximum power.

In some embodiments, the controlling operation of the first converter according to the output voltage and the target output voltage includes: comparing the output voltage and the target output voltage to determine an output voltage difference; performing proportional integral adjustment according to the output voltage difference to determine a first target duty cycle; and performing pulse width modulation according to the first target duty cycle to generate a first switching signal and send it to the first converter.

In the above solution, proportional integral adjustment is performed in combination with the output voltage and the target output voltage, and pulse width modulation is performed on the result of the proportional integral adjustment to determine the first switching signal required for the operation of the first converter, and on-off control of the first converter is performed, thereby achieving operation control of the first converter. This features high control accuracy.

In some embodiments, the operation method of the new energy storage submodule further includes: acquiring a direct current bus voltage reference value and a direct current bus voltage; and performing voltage stabilization control on the direct current bus according to the direct current bus voltage reference value and the direct current bus voltage.

In the above solution, the direct current bus voltage and the direct current bus voltage reference value can also be combined to achieve voltage stabilization control of the direct current bus, effectively improving the operation reliability of the new energy storage submodule.

In some embodiments, the performing voltage stabilization control on the direct current bus according to the direct current bus voltage reference value and the direct current bus voltage includes: comparing the direct current bus voltage reference value and the direct current bus voltage to determine a bus voltage difference; performing proportional integral adjustment according to the bus voltage difference to determine a second target duty cycle; and performing pulse width modulation according to the second target duty cycle to generate a second switching signal and send it to a second converter.

In the above solution, combined with the bus voltage difference between the direct current bus voltage reference value and the direct current bus voltage, proportional integral adjustment and pulse width modulation are sequentially performed to finally generate the second switching signal to control the operation of the second converter. That is, voltage stabilization control of the direct current bus is achieved through the second converter, which has the advantage of high voltage stabilization control accuracy.

The embodiments of this application further provide an energy storage valve, including a submodule controller and the above new energy storage submodule, where all new energy storage submodules are cascaded, and all the new energy storage submodules are connected to submodule controllers respectively.

The embodiments of this application further provide an energy storage system, including a converter valve and the above energy storage valve, where a first end and a second end formed after cascading all the new energy storage submodules are both connected to the converter valve, and the converter valve is configured to connect to an alternating current grid.

In some embodiments, the converter valve includes at least one of a voltage source converter valve, a line commutated converter valve and a cascaded converter valve.

The embodiments of this application further provide an operation method based on the above energy storage system, including: in a case that the new energy assembly has output, acquiring a new energy output power of the new energy assembly and a system demand power of the alternating current grid; and controlling the new energy assembly to output electric energy according to the new energy output power and the system demand power.

In the operation method of the above energy storage system, the output electric energy control of the new energy assembly is achieved in combination with the new energy output power of the new energy assembly and the system demand power of the alternating current grid, smoothing the grid output, achieving high integration of new energy power generation, grid connection, and energy storage, and improving the grid-connected operation reliability of the energy storage system.

In some embodiments, the controlling the new energy assembly to output electric energy according to the new energy output power and the system demand power includes: in a case that the new energy output power is greater than the system demand power, controlling the new energy assembly to output electric energy to the alternating current grid and the energy storage module; in a case that the new energy output power is equal to the system demand power, controlling the new energy assembly to output electric energy to the alternating current grid; and in a case that the new energy output power is less than the system demand power, controlling both the new energy assembly and the energy storage module to output electric energy to the alternating current grid.

In the above solution, according to the magnitude relationship between the new energy output power and the system demand power, the power transmission of the new energy assembly and the charging and discharging control of the energy storage module are performed, effectively improving the operation efficiency of the energy storage system.

In some embodiments, the operation method of the energy storage system further includes: in a case that the new energy assembly has no output, controlling the energy storage module to output electric energy to the alternating current grid.

In the above solution, in the case that the new energy assembly has no output, the alternating current grid is powered by the energy storage module to meet the load demand of the alternating current grid, improving the functional reliability of the energy storage system for the alternating current grid.

In some embodiments, the operation method of the energy storage system further includes: in a case of bypassing the new energy storage submodule, disconnecting electric energy transmission between the new energy assembly and the energy storage module.

In the above solution, in the case of bypassing the new energy storage submodule, the electric energy transmission from the new energy assembly to the energy storage module is interrupted, improving the operation safety of the energy storage module.

In some embodiments, the operation method of the energy storage system further includes: in a case that the energy storage module is fully charged, disconnecting electric energy transmission between the new energy assembly and the energy storage module; and in a case that discharge of the energy storage module reaches a preset electric quantity threshold, conducting electric energy transmission between the new energy assembly and the energy storage module.

In the above solution, in a case that the energy storage module is fully charged, the electric energy transmission from the new energy assembly to the energy storage module is interrupted to prevent overcharging of the energy storage module, improving the charging safety of the energy storage module.

### BRIEF DESCRIPTION OF DRAWINGS

In order to more clearly illustrate the technical solutions of the embodiments of this application, the drawings to be used in the embodiments of this application will be briefly introduced below. Obviously, the drawings described below are only some embodiments of this application. For those of ordinary skill in the art, other drawings can be obtained based on these drawings without creative effort. In the drawings:
FIG. 1 is a schematic diagram of an application scenario of a new energy storage submodule in some embodiments of this application;
FIG. 2 is a schematic structural diagram of a converter valve in some embodiments of this application;
FIG. 3 is a schematic structural diagram of a converter valve in other embodiments of this application;
FIG. 4 is a schematic structural diagram of a new energy storage submodule in some embodiments of this application;
FIG. 5 is a schematic structural diagram of a new energy storage submodule in other embodiments of this application;
FIG. 6 is a schematic structural diagram of a new energy storage submodule in still other embodiments of this application;
FIG. 7 is a schematic structural diagram of a new energy storage submodule in yet other embodiments of this application;
FIG. 8 is a schematic structural diagram of a new energy storage submodule in still other embodiments of this application;
FIG. 9 is a schematic structural diagram of a new energy storage submodule in yet other embodiments of this application;
FIG. 10 is a schematic flowchart of an operation method of a new energy storage submodule in some embodiments of this application;
FIG. 11 is a schematic diagram of a first converter control procedure in some embodiments of this application;
FIG. 12 is a schematic flowchart of an operation method of a new energy storage submodule in other embodiments of this application;
FIG. 13 is a schematic diagram of a second converter control procedure in some embodiments of this application; and
FIG. 14 is a schematic flowchart of an operation method of an energy storage system in some embodiments of this application.

### DESCRIPTION OF EMBODIMENTS

The embodiments of the technical solutions of this application will be described in detail below in conjunction with the accompanying drawings. The following embodiments are only used to illustrate the technical solutions of this application more clearly, and thus are only examples and do not limit the protection scope of this application. Unless otherwise defined, all technical and scientific terms used herein have the same meaning as commonly understood by those skilled in the technical field to which this application belongs. The terms used herein are only for the purpose of describing specific embodiments and are not intended to limit this application. The terms "including" and "having" and any variations thereof in the specification and claims of this application and the above brief description of the drawings are intended to cover non-exclusive inclusion.

In the description of the embodiments of this application, technical terms such as "first" and "second" are only used to distinguish different objects, and should not be understood as indicating or implying relative importance or implicitly indicating the number, specific order or primary and secondary relationship of the indicated technical features. In the description of the embodiments of this application, the meaning of "plurality" is two or more unless otherwise clearly and specifically limited.

The reference to "an embodiment" herein means that a particular feature, structure, or characteristic described in conjunction with the embodiment can be included in at least one embodiment of this application. The appearance of the phrase in various places in the specification does not necessarily refer to the same embodiment, nor is it an independent or alternative embodiment that is mutually exclusive with other embodiments. Those skilled in the art clearly and implicitly understand that the embodiments described herein can be combined with other embodiments.

In the description of the embodiments of this application, the term "plurality" refers to two or more (including two), similarly, "plurality of groups" refers to two or more groups (including two groups), and "plurality of pieces" refers to two or more pieces (including two pieces).

In the description of the embodiments of this application, unless otherwise clearly specified and limited, technical terms such as "mounted", "connected", "coupled", "fixed" should be understood in a broad sense, for example, it can be a fixed connection or a detachable connection, or integrated. It can also be a mechanical connection or an electrical connection. It can be directly connected or indirectly connected through an intermediary, and it can be the communication inside two elements or the interaction relationship between two elements. For those of ordinary skill in the art, the specific meanings of the above terms in the embodiments of this application can be understood according to specific situations.

At present, from the perspective of market development trends, new energy is gradually replacing traditional fossil energy and occupies an important position in the energy supply field. Among various new energies, new energy power generation has been widely used due to advantages such as stable and reliable operation, simple operation and maintenance, low maintenance costs, and long service life. New energy power generation generally operates in grid connection with an alternating current grid and an energy storage system. After converting light energy (taking photovoltaic energy as an example) into direct current energy, a new energy assembly can directly deliver it to an energy storage system for storage, or transmitted to an alternating current grid after conversion and boosting processing by a new energy inverter and a transformer. The voltage level of the new energy inverter is generally below 1 KV (kilovolt). With the application of multi-level technology in new energy grid-connected systems, the voltage level of the new energy inverter can even reach 35 KV.

However, in the new energy grid-connected system where new energy assemblies and an energy storage system operate in grid connection, phenomena such as light abandonment and unstable power quality are inevitable due to failures of new energy assemblies. Especially in scenarios where some new energy assemblies are connected in series and/or parallel to form a new energy array, a failure of a single new energy assembly will affect the operation of the entire new energy array, and in severe cases, even cause the new energy grid-connected system to stop operating, and the new energy grid-connected system has the defect of low system availability.

In order to alleviate the problem of low system availability of the new energy grid-connected system, research has found that the centrally arranged new energy assemblies can be distributedly arranged in the energy storage system. Through the distributed arrangement of the new energy assemblies, the impact of a single new energy assembly failure on the new energy grid-connected system is reduced, thereby improving the system availability of the new energy grid-connected system.

Based on the above considerations, to achieve the distributed arrangement of new energy assemblies, through in-depth research, a new energy storage submodule integrated with new energy assemblies is designed. Specifically, a new energy storage submodule including a direct current bus, a power module, an energy storage module, a converter and a new energy assembly is constructed, and the new energy assembly is connected to the energy storage system in the form of new energy storage submodule to achieve grid-connected operation of new energy power generation and energy storage systems.

Through the above method, the new energy assemblies are distributedly arranged in each new energy storage submodule, modularizing the new energy assemblies, which has good flexibility, can reduce the impact of a single failure of a new energy assembly on the new energy grid-connected system, that is, in the case that a single new energy assembly fails, the new energy storage submodule where the failed new energy assembly is located can be removed, reducing the impact on the operation of other new energy assemblies, increasing the proportion of operation time of the new energy grid-connected system, thereby effectively improving the system availability of the new energy grid-connected system.

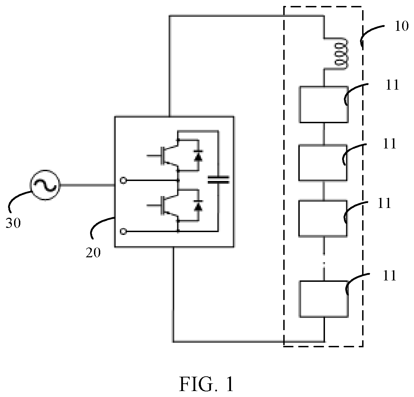

The new energy storage submodule provided by the embodiments of this application is applied to an energy storage system. After the energy storage system is connected to an alternating current grid, a new energy grid-connected system can be formed. Specifically, the energy storage system can be a direct current direct-hang type energy storage system. For reference, see FIG. 1. In this type of energy storage system, new energy storage submodules 11 are cascaded in sequence, and the structure formed after cascading is connected to a submodule controller (not shown in the figure) to jointly form an energy storage valve 10. The energy storage valve 10 is connected to a converter valve 20, and the converter valve 20 is further connected to an alternating current grid 30 to finally obtain a new energy grid-connected system.

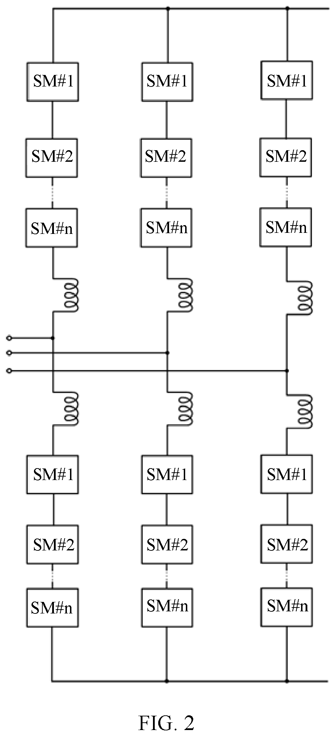

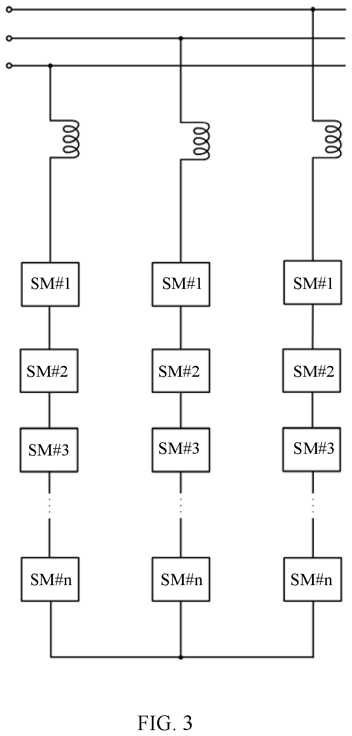

It should be noted that in the above energy storage system, the type of the converter valve 20 is not unique, and any device that can achieve rectification and inversion functions can be used, which can be set according to actual needs. For example, in some embodiments, the converter valve 20 includes a line commutated converter (Line Commutated Converter, LCC) converter valve, a VSC (Voltage Sourced Converter, voltage sourced converter) converter valve, or the like. In some embodiments, the VSC converter valve can alternatively be two single-level converters, a three-level converter, a modular multilevel converter (modular multilevel converter, MMC) converter valve as shown in FIG. 2, or the like, which is not specifically limited. In other embodiments, the converter valve 20 can alternatively adopt a cascaded converter valve as shown in FIG. 3, which can be set according to actual needs.

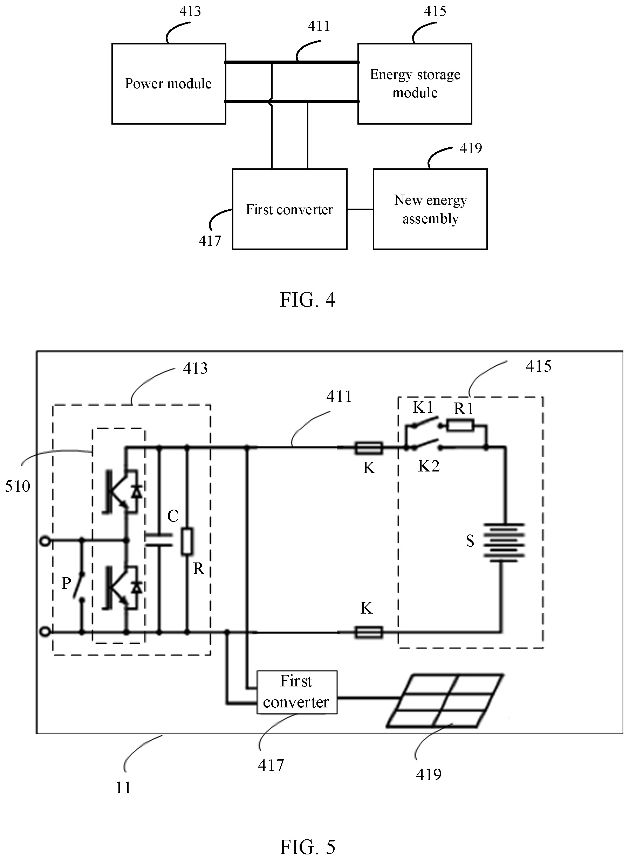

Referring to FIG. 4, the new energy storage submodule provided by the embodiments of this application includes a direct current bus 411, a power module 413, an energy storage module 415, a first converter 417 and a new energy assembly 419. The power module 413 includes a grid connection side and a direct current side. The grid connection side of the power module 413 is configured to cascade with an adjacent new energy storage submodule. The energy storage module 415 is connected to the direct current side of the power module 413 through the direct current bus 411. The first converter 417 is connected to the direct current bus 411, and the new energy assembly 419 is connected to the first converter 417.

The direct current bus 411 is a line for direct current energy transmission between the energy storage module 415 and the power module 413. The power module 413 is a device used to achieve power conversion. The energy storage module 415 is a device used to store electric energy and release electric energy when there is a discharge demand. The new energy assembly 419 is a device capable of generating electric energy through new energy power generation. The first converter 417 is a device capable of converting the electric energy generated by the new energy assembly 419 into direct current of an appropriate magnitude and transmitting it to the direct current bus.

In the technical solution of this application, the first converter 417 is connected to the direct current bus 411. In some embodiments, the first converter 417 can be connected to a common connection point of the direct current bus 411 and the power module 413. In this case, it can be equivalently considered that the first converter 417 is connected to the direct current side of the power module 413. In other embodiments, the first converter 417 can be connected to the middle section of the direct current bus 411. In this case, it can be equivalently considered that the first converter 417 is connected to the direct current side of the power module 413 through the direct current bus 411, and the first converter 417 is connected to the energy storage module 415 through the direct current bus 411. In other embodiments, the first converter 417 can alternatively be connected to the common connection point of the direct current bus 411 and the energy storage module 415. In this case, it can be equivalently considered that the first converter 417 is connected to the energy storage module 415.

It should be noted that the specific type of the new energy assembly 419 is not unique, and it can be one or more of a photovoltaic assembly, a wind power generation assembly, a biomass power generation assembly, and a tidal power generation assembly. Accordingly, the type of the first converter 417 will also differ. If the electric energy generated by the new energy assembly 419 is alternating current, the corresponding first converter 417 should use an alternating current/direct current converter (that is an AC/DC converter). If the electric energy generated by the new energy assembly 419 is direct current, the corresponding first converter 417 should use a direct current converter (that is a DC/DC converter). It should be noted that the direct current bus 411 includes a first end direct current bus (positive direct current bus or negative direct current bus) and a second end direct current bus (whose polarity is opposite to that of the first end direct current bus). The energy storage module 415 is connected to the power module 413 through the direct current bus 411, including the positive and negative electrodes of the energy storage module 415 that are connected to the two ends of the direct current side of the power module 413 through the positive and negative direct current buses respectively. It should be noted that the first converter 417 being connected to the direct current bus 411, and the new energy assembly 419 being connected to the first converter includes: the first converter 417 has at least three terminals, two of which are connected to the positive and negative direct current buses respectively, and at least one of which is connected to the new energy assembly 419. To facilitate understanding of the technical solution of this application, the following embodiments take the new energy assembly 419 as a photovoltaic assembly to achieve photoelectric conversion, and the first converter 417 as a direct current converter as an example for explanation. In this way, the power generation operation stability of the new energy storage submodule can be effectively improved.

During the normal operation of the new energy assembly 419, light energy is converted into electric energy and transmitted in the form of direct current energy, and after direct current conversion by the first converter 417, converted into direct current energy suitable for the energy storage module 415 and transmitted to the energy storage module 415 for storage. The new energy assembly 419 can alternatively be connected to a new energy inverter outside the new energy storage submodule, and the direct current energy generated by the new energy assembly 419 is transmitted to the new energy inverter for conversion to obtain alternating current energy. After being boosted by a subsequent transformer, the alternating current energy is delivered to the alternating current grid for use.

In actual usage scenarios, the new energy storage submodule only needs to select to transmit direct current energy to the energy storage module 415 and/or the alternating current grid according to the system demand power of the alternating current grid and the stored electric quantity of the energy storage module 415, so as to minimize the occurrence of light abandonment of the new energy assembly 419. In this way, when the electric energy emitted by the new energy assembly 419 is used to charge the energy storage module 415, it only needs to pass through the first converter 417 at minimum, that is, only one stage of conversion is performed, to reach the energy storage module 415. This reduces losses, lowers delay, and greatly improves conversion efficiency.

It should be noted that the specific type of the power module 413 is not unique, and it can be a full-bridge power module or a half-bridge power module. Bridge arm power electronic devices include at least one of IGBT (Insulate-Gate Bipolar Transistor, insulated gate bipolar transistor), IEGT (Injection Enhanced Gate Transistor, injection enhanced gate transistor), IGCT (Integrated Gate-Commutated Thyristor, integrated gate-commutated thyristor), which can be selected according to actual needs. In some embodiments, a half-bridge power module is used as an example for explanation. Referring to FIG. 5, the power module 413 includes a half-bridge power unit 510 and a parallel direct current support capacitor C. Here, the power module 413 is used to control the input and cut-off of the new energy storage submodule. In some embodiments, continuing to refer to FIG. 5, the power module 413 further includes a voltage equalizing resistor R arranged in parallel with the direct current support capacitor C, and/or a bypass switch P arranged on the side of the half-bridge power unit away from the direct current support capacitor C.

Similarly, the specific structure of the energy storage module 415 is not unique. In some embodiments, referring to FIG. 5, the energy storage module 415 includes an energy storage battery pack S and a charge-discharge circuit. One end of the energy storage battery pack S is connected to the direct current bus 411 through the charge-discharge circuit, and the other end of the energy storage battery pack S is connected to the direct current bus 411. The specific structure of the charge-discharge circuit is not unique. As shown in FIG. 5, it can include a pre-charge resistor R1, a pre-charge switch K1, and a normal switch K2. The pre-charge resistor R1 and the pre-charge switch K1 are connected in series and then connected in parallel to two ends of the normal switch K2 to form the charge-discharge circuit. The energy storage battery pack S can include a plurality of lithium batteries, and the lithium batteries are finally formed into the energy storage battery pack S through series and/or parallel connection.

In some embodiments, referring to FIG. 5, the new energy storage submodule further includes an isolation switch K. The energy storage module 415 is connected to the power module 413 through the isolation switch K. The electrical isolation between the energy storage module 415 and the power module 413 is achieved by turning off the isolation switch K, improving the operation safety of the new energy storage submodule.

In the above solution, in the new energy grid-connected system, the new energy assemblies 419 are distributedly arranged in each sub-module, forming a new energy storage submodule including a direct current bus 411, a power module 413, an energy storage module 415, a first converter 417, and a new energy assembly 419. The new energy assembly 419 is connected to the energy storage system in the form of a new energy storage submodule for operation. Through this solution, the new energy assemblies 419 are distributedly arranged in each new energy storage submodule, modularizing the new energy assemblies 419, which has good flexibility, can reduce the impact of a single failure of the new energy assembly 419 on the new energy grid-connected system, that is, in the case that a single new energy assembly 419 fails, the new energy storage submodule where the failed new energy assembly is located can be removed, reducing the impact on the operation of other new energy assemblies 419, increasing the proportion of operation time of the new energy grid-connected system, thereby effectively improving the system availability of the new energy grid-connected system.

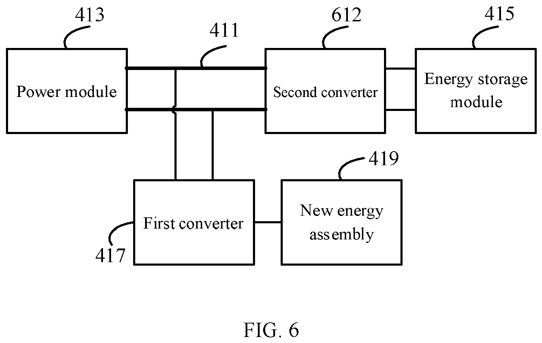

Referring to FIG. 6, in some embodiments, the new energy storage submodule further includes a second converter 612, and the second converter 612 is arranged between the direct current bus 411 and the energy storage module 415, and is connected to the direct current bus 411 and the energy storage module 415 respectively.

The second converter 612 is a converter capable of bidirectional transmission of direct current energy. Specifically, in the solution of the embodiments of this application, bidirectional transmission means that the direct current energy output by the new energy assembly 419 can be input to the energy storage module 415 through the second converter 612 to achieve charging of the energy storage module 415. The electric energy stored in the energy storage module 415 can be output through the second converter 612 to achieve discharging of the energy storage module 415.

Moreover, through the arrangement of the second converter 612 in the embodiments of this application, during the operation of the new energy storage submodule, the operation of switching devices in the second converter 612 can be controlled in combination with changes in the direct current bus voltage to achieve the purpose of stabilizing the voltage of the direct current bus 411, effectively improving the operation stability of the new energy storage submodule.

In the above solution, a second converter 612 is further arranged between the power module 413 and the energy storage module 415. Through the second converter 612, the energy storage module 415 can achieve direct current voltage conversion during charging and discharging to meet the charging and discharging requirements of the energy storage module 415.

The specific type of the second converter 612 is not unique. In some embodiments, the second converter 612 includes a bidirectional non-isolated direct current converter or a bidirectional isolated direct current converter.

An isolated direct current converter refers to a device that achieves conversion from direct current voltage to direct current voltage through an isolation element. The isolation element can reduce the possibility of circuit coupling between the input end and the output end, improving operation safety and stability. The isolation element generally includes a transformer and an optocoupler. A non-isolated direct current converter is a device that does not use isolation elements such as transformers and is directly connected to the circuit to perform direct current to direct current voltage conversion. A bidirectional isolated direct current converter refers to an isolated direct current converter capable of bidirectional transmission of direct current voltage. A bidirectional non-isolated direct current converter refers to a non-isolated direct current converter capable of bidirectional transmission of direct current voltage.

According to different actual usage scenarios or needs, in the new energy storage submodule, the second converter 612 can be set as an isolated type direct current converter, that is, a bidirectional isolated direct current converter; or set as a non-isolated type direct current converter, that is, a bidirectional non-isolated direct current converter, which is not specifically limited.

In the above solution, the second converter 612 can be set as a bidirectional non-isolated direct current converter or a bidirectional isolated direct current converter, which can be selected according to actual scenarios and has high setting flexibility.

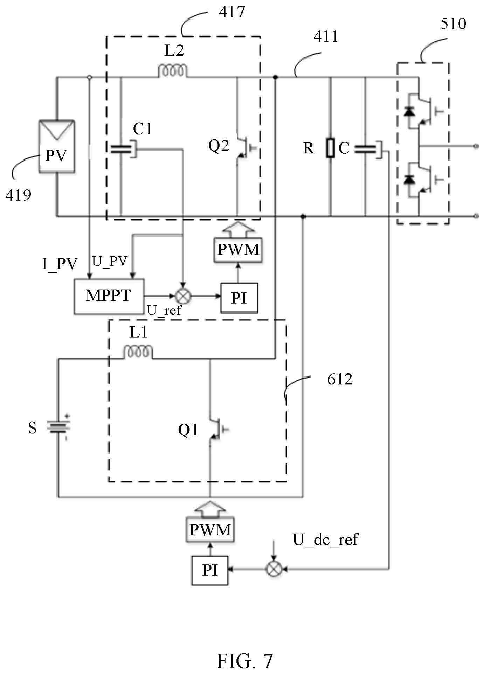

Referring to FIG. 7, in some embodiments, the direct current bus 411 includes a first end direct current bus and a second end direct current bus. The bidirectional non-isolated direct current converter includes a first inductor L1 and a first switching device Q1. A first end of the first inductor L1 is connected to a first end of the first switching device Q1 and the first end direct current bus. A second end of the first inductor L1 is connected to the energy storage module 415. A second end of the first switching device Q1 is connected to the second end direct current bus and the energy storage module 415. A third end of the first switching device Q1 is configured to receive a switching signal sent by the submodule controller.

The first end direct current bus is a positive end direct current bus or a negative end direct current bus, and the second end direct current bus can also be a positive end direct current bus or a negative end direct current bus, as long as the polarity is opposite to that of the first end direct current bus. In the case that the direct current bus 411 includes a first end direct current bus and a second end direct current bus, both ends of the first end direct current bus are connected to the power module 413 and the bidirectional non-isolated direct current converter respectively, and both ends of the second end direct current bus are also connected to the power module 413 and the bidirectional non-isolated direct current converter respectively. The first converter 417 is connected to the first end direct current bus and the second end direct current bus between the power module 413 and the second converter 612 respectively.

The solution of this embodiment takes the bidirectional non-isolated direct current converter as an example for explanation. The bidirectional non-isolated direct current converter includes a first inductor L1 and a first switching device Q1, forming a boost converter, using the boost converter as the bidirectional non-isolated direct current converter.

Based on the new energy storage submodule of this embodiment, during actual operation, the corresponding submodule controller of the new energy storage submodule will perform voltage stabilization control on the direct current bus 411. It can be one submodule controller corresponding to one new energy storage submodule, or one submodule controller corresponding to multiple new energy storage submodules, or one submodule controller corresponding to all new energy storage submodules. During the voltage stabilization control process of the direct current bus 411, the submodule controller can acquire the direct current bus voltage and the output voltage required by the current new energy storage submodule (which can be used as the direct current bus voltage reference value), and complete the voltage stabilization control of the direct current bus 411 with the direct current bus voltage reference value and the direct current bus voltage.

It can be understood that the method of acquiring the direct current bus voltage is not unique. In some embodiments, a voltage detector can be arranged at the corresponding position of the direct current bus 411 to collect the direct current bus voltage through the voltage detector. In other embodiments, the voltage collection function can also be integrated in the submodule controller, and the submodule controller is connected to the corresponding position of the direct current bus 411 through a strong electricity-weak electricity conversion board to achieve direct current bus voltage collection.

It should be noted that the method for the third end of the first switching device Q1 to receive the switching signal sent by the submodule controller is not unique. In some embodiments, the third end of the first switching device Q1 can be connected to a strong electricity-weak electricity conversion board, and then connected to the submodule controller through the strong electricity-weak electricity conversion board to achieve reception of the switching signal. In other embodiments, the submodule controller can alternatively have a strong electricity operation condition, and in this case, the submodule controller is directly connected to the third end of the first switching device Q1.

In the above solution, the second converter 612 specifically uses a bidirectional non-isolated direct current converter, and the bidirectional non-isolated direct current converter includes a first inductor L1 and a first switching device Q1, which has a simple structure and is easy to implement, with the advantage of high economic benefit.

In some embodiments, the new energy storage submodule further includes an insulation support assembly, and the new energy assembly 419 is arranged on the insulation support assembly.

The insulation support assembly is a support device made of insulating material and having an insulation function. In the solution of this embodiment, the new energy storage submodule includes an insulation support assembly, the new energy assembly 419 is arranged on the insulation support assembly, and then the insulation support assembly is placed on a setup platform (such as the ground) to achieve high-voltage insulation between the new energy assembly 419 and the ground, improving the operation safety of the new energy storage submodule.

In some embodiments, in the new energy storage submodule, the power module 413, the energy storage module 415, and the new energy assembly 419 are all arranged on the insulation support assembly and set up on the placement platform through the insulation support assembly to improve the operation safety of the new energy storage submodule.

It can be understood that the power module 413, the energy storage module 415, and the new energy assembly 419 can be distributedly set up on different insulation support assemblies, or all set up on one insulation support assembly, which is not specifically limited.

It should be noted that the specific type of the insulation support assembly is not unique, as long as it is a device with insulation support function. For example, in some embodiments, the insulation support assembly includes a support insulator.

In the above solution, the new energy assembly 419 is arranged on the insulation support assembly, and voltage isolation is performed through the insulation support assembly to improve the operation reliability of the new energy assembly 419.

In some embodiments, the first converter 417 includes a non-isolated direct current converter.

The solution of this embodiment takes the new energy assembly 419 outputting direct current energy as an example for explanation. Corresponding to the above new energy assembly 419 being arranged on the insulation support assembly, the high-voltage isolation problem of the new energy assembly 419 can be solved through the arrangement of the insulation support assembly. Therefore, when the new energy assembly 419 is connected to the direct current bus 411, there is no need for electrical isolation again. Through the solution of this embodiment, in the new energy grid-connected system, the grid connection of the new energy assembly 419 does not require a high-voltage isolation converter, and can be achieved through a non-isolated converter, that is, the new energy assembly 419 is connected to the direct current bus 411 through a non-isolated direct current converter.

In the above solution, in the case that the new energy assembly 419 performs voltage isolation through the insulation support assembly, the first converter 417 between the new energy assembly 419 and the direct current bus 411 directly uses a non-isolated first converter 417, which can effectively reduce costs.

It can be understood that in other embodiments, in the case that the new energy assembly 419 is arranged on the insulation support assembly, to further improve the high-voltage isolation reliability of the new energy assembly 419, the first converter 417 can also be set as an isolated direct current converter, which can be selected according to actual needs.

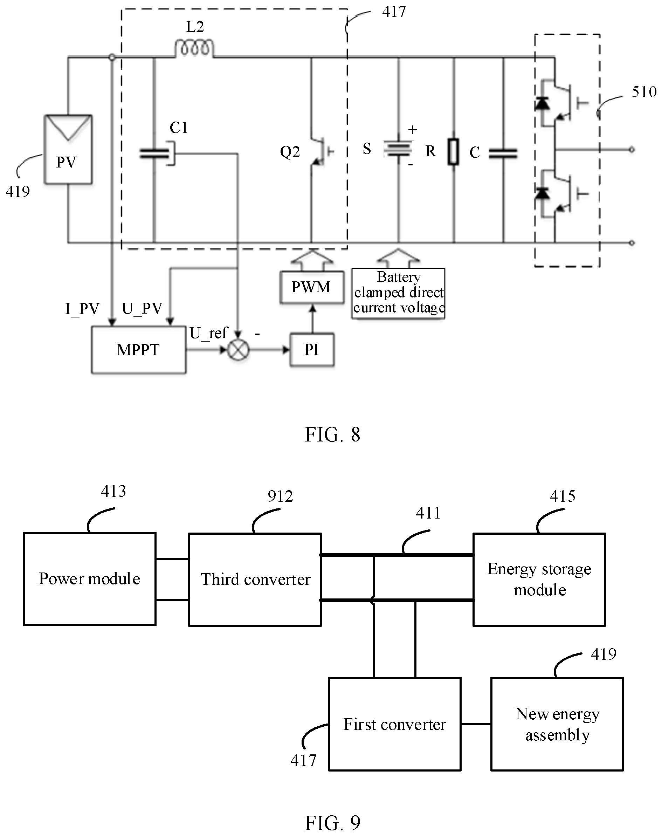

Referring to FIG. 8, in some embodiments, the direct current bus 411 includes a first end direct current bus and a second end direct current bus. The non-isolated direct current converter includes a first capacitor C1, a second inductor L2, and a second switching device Q2. A first end of the first capacitor C1 is connected to the new energy assembly 419 and a first end of the second inductor L2. A second end of the second inductor L2 is connected to a first end of the second switching device Q2 and the first end direct current bus. A second end of the first capacitor C1 is connected to the new energy assembly 419 and a second end of the second switching device Q2. The second end of the second switching device Q2 is also connected to the second end direct current bus. A third end of the second switching device Q2 is configured to receive a switching signal sent by the submodule controller.

In the solution of this embodiment, the non-isolated direct current converter includes a first capacitor C1, a second inductor L2, and a second switching device Q2, that is, a boost type converter is formed through the first capacitor C1, the second inductor L2, and the second switching device Q2 to achieve direct current voltage conversion and output from the new energy assembly 419 to the energy storage module 415.

Based on the non-isolated direct current converter of the embodiments of this application, the submodule controller corresponding to the new energy storage submodule can achieve maximum power point tracking (MPPT, Maximum Power Point Tracking) control. Specifically, an MPPT controller is arranged in the submodule controller. During the operation of the new energy assembly 419, the output current and output voltage of the new energy assembly 419 are acquired through the MPPT controller, and maximum power point tracking is performed according to the output current and output voltage to obtain the voltage parameter required for the new energy assembly 419 to operate at the maximum power point, that is, the target output voltage. Then, the submodule controller uses the target output voltage as a reference value and regulates it in combination with the output voltage of the new energy assembly 419 to control the operation of the first converter 417 with the regulation result. Specifically, the on-off of the second switching device Q2 in the first converter 417 is controlled to complete the maximum power point tracking.

It can be understood that in some embodiments, the new energy storage submodule can be provided only with the first converter 417, and the first converter 417 includes a first capacitor C1, a second inductor L2, and a second switching device Q2. In this case, the submodule controller only needs to achieve maximum power tracking control according to the output voltage and output current of the new energy assembly 419. In this embodiment, due to the voltage clamping effect of the energy storage battery pack S in the energy storage module 415, the voltage of the direct current bus 411 will not suddenly change. Therefore, the voltage of the direct current bus 411 can be clamped through the energy storage battery pack S to achieve voltage stabilization of the direct current bus 411.

In other embodiments, the new energy storage submodule can be provided with both the first converter 417 and the second converter 612. The first converter 417 includes a first capacitor C1, a second inductor L2, and a second switching device Q2, while the second converter 612 includes a first inductor L1 and a first switching device Q1. In the solution of this embodiment, the submodule controller can not only achieve maximum power point tracking control according to the output voltage and output current of the new energy assembly 419, but also achieve voltage stabilization control of the direct current bus 411 in combination with the direct current bus voltage and the direct current bus voltage reference value (which can be combined with the output voltage required by the new energy storage submodule when the new energy storage submodule is actually put into the energy storage system for operation to meet the system demand).

In the above solution, the non-isolated direct current converter is constructed through the first capacitor C1, the second inductor L2, and the second switching device Q2, that is, a boost converter is used for direct current voltage conversion between the new energy assembly 419 and the energy storage module 415, which has the advantage of high output voltage stability.

In some embodiments, the first converter 417 includes an isolated direct current converter.

Different from the above new energy assembly 419 being arranged on the insulation support assembly and setting the first converter 417 as a non-isolated direct current converter, in the solution of this embodiment, the high-voltage isolation problem of the new energy assembly 419 is solved by setting an isolated direct current converter. Accordingly, in the solution of this embodiment, the new energy assembly 419 does not need to be arranged on the insulation support assembly, and the safe operation of the new energy storage submodule can still be ensured.

In the above solution, the first converter 417 between the new energy assembly 419 and the direct current bus 411 uses an isolated direct current converter, and high-voltage isolation of the new energy assembly 419 can be achieved through the isolation converter, so that the new energy assembly 419 can be set up without the insulation support assembly, improving the setup convenience of the new energy storage submodule.

Referring to FIG. 9, in some embodiments, the new energy storage submodule further includes a third converter 912, the third converter 912 is arranged between the direct current bus 411 and the power module 413, and is connected to the direct current bus 411 and the power module 413 respectively.

The energy storage module 415 is connected to the third converter 912 through the direct current bus 411, and the first converter 417 is connected to the direct current bus, so that the first converter 417 is connected between the energy storage module 415 and the third converter 912. The direct current energy after conversion by the first converter 417 can be directly transmitted to the energy storage module 415 for storage.

In the above solution, the energy storage module 415 is connected to the third converter 912 through the direct current bus 411, so that the new energy assembly 419 is directly connected between the third converter 912 and the energy storage module 415. The electric energy generated by the new energy assembly 419 can be transmitted to the energy storage module 415 without passing through the third converter 912, which can effectively improve the electric energy transmission efficiency.

The embodiments of this application further provide an operation method based on the above new energy storage submodule, including: in a case that an electric energy storage condition is satisfied, converting electric energy output by the new energy assembly through the first converter and then transmitting it to the energy storage module for storage; and in a case that an electric energy supply condition is satisfied, converting electric energy output by the new energy assembly through the first converter and the power module and then transmitting it to a grid for load power supply.

The structure of the new energy storage submodule is as shown in the above embodiments and the accompanying drawings, which are not be repeated here. Satisfying the electric energy storage condition means that the new energy storage submodule has a demand to store the electric energy generated by the new energy assembly 419 through the energy storage module 415. The specific form of satisfying the electric energy storage condition is not unique. In some embodiments, when the energy storage module 415 is not fully charged, it can be considered that the electric energy storage condition is satisfied. In other embodiments, when the energy storage system is not connected to the grid, or the load in the grid cannot fully consume the electric energy generated by the new energy assembly 419, it can be considered that the electric energy storage condition is satisfied. In other embodiments, when the new energy storage submodule receives a manually sent energy storage scheduling instruction from a user, it can be considered that the electric energy storage condition is satisfied.

Satisfying the electric energy supply condition means that the new energy storage submodule has a demand to supply power to an external load through the power module 413. The specific form is also not unique. In some embodiments, there is a power demand from the load in the grid. In other embodiments, when the new energy storage submodule receives a manually sent power supply scheduling instruction from a user, it is considered that the electric energy supply condition is satisfied.

It can be understood that the electric energy output by the new energy assembly 419 can be transmitted to the energy storage module 415 for storage while being transmitted to the grid for power supply through the first converter and the power module 413. That is, electric energy storage and electric energy supply can be achieved simultaneously or separately, which is not specifically limited.

In the solution of this embodiment, the new energy storage submodule can transmit the electric energy generated by the new energy assembly 419 to the energy storage module 415 for storage or to the grid for load power supply according to user manual scheduling or other methods, which can be selected according to actual needs.

In the above solution, the electric energy generated by the new energy assembly 419 can be transmitted to the energy storage module 415 for storage and/or transmitted to the grid for load power supply for a load according to actual conditions, reducing the situation where the electric energy generated by the new energy assembly 419 is wasted and improving the electric energy utilization rate of the new energy assembly 419.

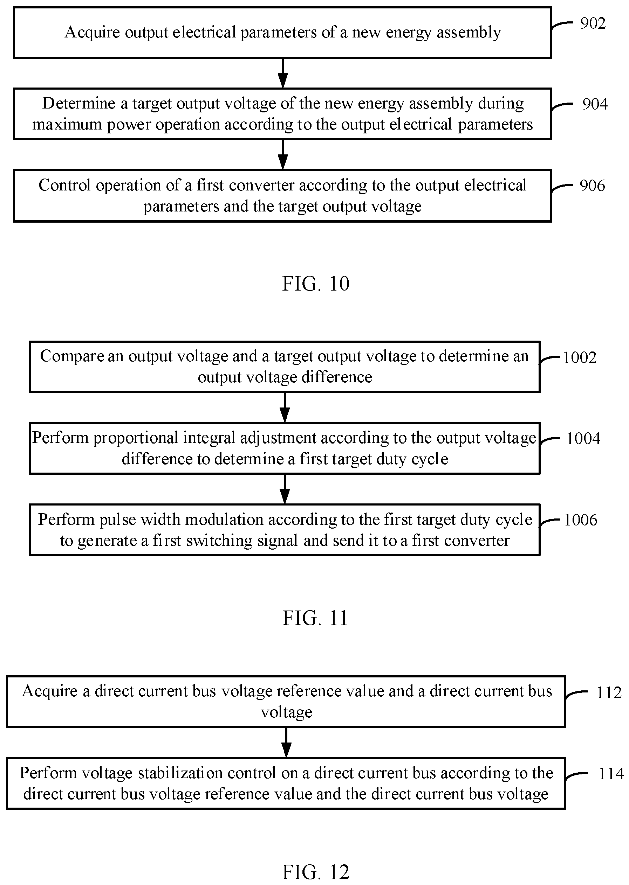

Referring to FIG. 10, in some embodiments, the operation method of the new energy storage submodule further includes step 902, step 904, and step 906.

Step 902: Acquire output electrical parameters of the new energy assembly.

Step 904: Determine a target output voltage of the new energy assembly during maximum power operation according to the output electrical parameters.

Step 906: Control operation of the first converter according to the output electrical parameters and the target output voltage.

The new energy storage submodule is as shown in the above embodiments and the accompanying drawings. The new energy storage submodule further includes a controller, and the controller is connected to the first converter. The controller can be a device independently set relative to the submodule controller, or a submodule controller can be directly used as the controller, and details are not be described herein. For ease of understanding, the following takes the controller being the submodule controller for explanation. In the solution of the embodiments of this application, the new energy storage submodule is in communication connection with the submodule controller. In the case that the new energy assembly 419 transmits direct current energy to the energy storage module 415, the submodule controller can acquire the output electrical parameter of the new energy assembly 419 output to the first converter 417, and then perform analysis based on the acquired output electrical parameter to obtain the target output voltage for the new energy assembly 419 in the current new energy storage submodule to operate at maximum output power. Finally, the submodule controller performs feedback adjustment with the target output voltage and the output electrical parameter, so that the photovoltaic panel finally operates in a maximum power operation state, achieving maximum power operation control of the new energy assembly 419.

In the above solution, the output electrical parameters of the new energy assembly 419 can be combined to maintain the new energy assembly 419 operating at maximum power, improving the operation efficiency of the new energy assembly 419.

It should be noted that the specific type of the output electrical parameters is not unique. In some embodiments, the output electrical parameters include output voltage and output current, that is, the output voltage and output current of the new energy assembly 419. Accordingly, in some embodiments, step 904 includes: performing maximum power point tracking control according to the output voltage and the output current to determine the target output voltage of the new energy assembly during maximum power operation; step 906 includes: controlling the operation of the first converter according to the output voltage and the target output voltage.

In the solution of this embodiment, the target output voltage of the new energy assembly 419 during maximum output power operation is determined through the output voltage and output current of the new energy assembly 419. Specifically, maximum power point tracking is performed by the MPPT controller in the submodule controller, and the target output voltage that can achieve the maximum power output of the new energy assembly 419 at this time is found in combination with the MPPT algorithm and used as the reference voltage. Then, the submodule controller regulates in combination with the acquired reference voltage and output voltage to obtain a regulation parameter required for the output voltage of the new energy assembly 419 to track the target output voltage, and controls the operation of the first converter 417 with the obtained regulation parameter.

It should be noted that the manner used by the submodule controller to acquire the output current and output voltage is not unique. In some embodiments, a voltage collector and a current collector can be arranged at the output end of the new energy assembly 419, and the output voltage and output current are collected through the voltage collector and the current collector respectively and transmitted to the submodule controller. The specific transmission manner is not unique. The voltage collector and current collector can be connected to a high-low voltage conversion, and then the submodule controller acquires the voltage and current through the high-low voltage conversion.

In the above solution, maximum power point tracking control can be performed in combination with the output current and output voltage of the new energy assembly 419, thereby maintaining the new energy assembly 419 operating at the maximum power point and improving the operation efficiency of the new energy assembly 419.

Referring to FIG. 11, in some embodiments, the controlling operation of the first converter according to the output voltage and the target output voltage includes step 1002, step 1004, and step 1006.

Step 1002: Compare the output voltage and the target output voltage to determine an output voltage difference.

Step 1004: Perform proportional integral adjustment according to the output voltage difference to determine a first target duty cycle.

Step 1006: Perform pulse width modulation according to the first target duty cycle to generate a first switching signal and send it to the first converter.

Referring to FIG. 7 or FIG. 8, the first converter 417 includes a first capacitor C1, a second inductor L2, and a second switching device Q2. The submodule controller includes an MPPT controller, a comparator, a proportional integral (PI, Proportional Integral) regulator, and a pulse width modulation (PWM, Pulse Width Modulation) signal generator. The MPPT controller of the submodule controller is connected to the output end of the new energy assembly 419 to acquire the output current I_PV of the new energy assembly 419. The MPPT controller is connected to the first capacitor C1 arranged in parallel with the new energy assembly 419, and the voltage of the first capacitor C1 is used as the output voltage U_PV of the new energy assembly 419. After the MPPT controller performs maximum power point tracking to obtain the target output voltage, the target output voltage and the output voltage are differenced and compared in the comparator to obtain the output voltage difference U_ref. Then, the output voltage difference is transmitted to the PI regulator for PI adjustment, and the first target duty cycle is output. Finally, the PWM signal generator generates a corresponding first switching signal in combination with the first target duty cycle and sends it to the second switching device Q2, to control the on-off of the second switching device Q2 with the switching signal, completing the maximum power tracking control.

In the above solution, proportional integral adjustment is performed in combination with the output voltage and the target output voltage, and pulse width modulation is performed on the result of the proportional integral adjustment to determine the first switching signal required for the operation of the first converter 417, so as to implement on-off control over the first converter 417, thereby achieving operation control of the first converter 417 with high control accuracy.

Referring to FIG. 12, in some embodiments, the operation method of the new energy storage submodule further includes step 112 and step 114.

Step 112: Acquire a direct current bus voltage reference value and a direct current bus voltage.

Step 114: Perform voltage stabilization control on the direct current bus according to the direct current bus voltage reference value and the direct current bus voltage.

The direct current bus voltage reference value refers to the output voltage required by a single new energy storage submodule calculated in combination with actual power demand in the case that the new energy storage submodule is connected to the energy storage system and the energy storage system operates with a fixed number of new energy storage submodules. The new energy storage submodule is in communication connection with the submodule controller (a strong electricity-weak electricity conversion board can be arranged between the two). During the charging and discharging process of the energy storage module 415, the submodule controller can acquire the direct current bus voltage reference value and the direct current bus voltage to perform voltage stabilization control, so that the direct current bus voltage remains stable.

Similarly, the method of acquiring the direct current bus voltage is not unique. A voltage detector can be arranged at the corresponding position of the direct current bus 411 to collect the direct current bus voltage; or the voltage collection function can be integrated in the submodule controller, and the submodule controller is connected to a strong electricity-weak electricity conversion board, and then connected to the corresponding position of the direct current bus 411 through the strong electricity-weak electricity conversion board to achieve direct current bus voltage collection, which is not specifically limited.

In the above solution, the direct current bus 411 voltage stabilization control can also be achieved in combination with the direct current bus voltage and the direct current bus voltage reference value, effectively improving the operation reliability of the new energy storage submodule.

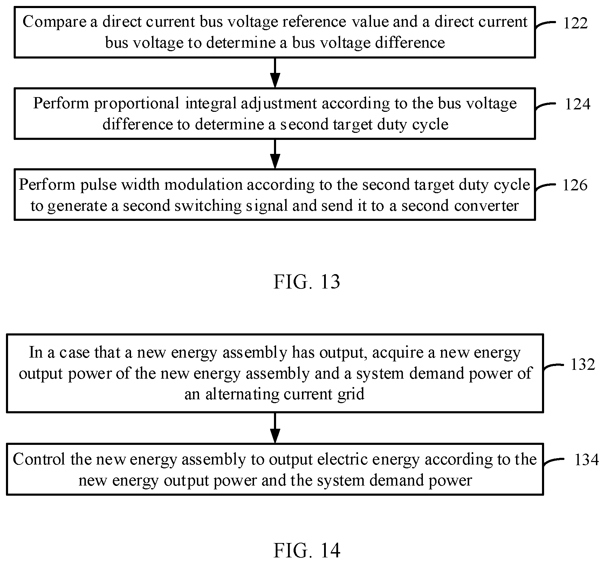

Referring to FIG. 13, in some embodiments, step 114 includes step 122, step 124, and step 126.

Step 122: Compare the direct current bus voltage reference value and the direct current bus voltage to determine a bus voltage difference.

Step 124: Perform proportional integral adjustment according to the bus voltage difference to determine a second target duty cycle.

Step 126: Perform pulse width modulation according to the second target duty cycle to generate a second switching signal and send it to the second converter.

Referring to FIG. 7, in the solution of the embodiments of this application, the second converter 612 includes a first inductor L1 and a first switching device Q1. The submodule controller includes a comparator, a PI regulator, and a PWM signal generator. The submodule controller acquires the voltage across two ends of the direct current support capacitor C in the power module 413 as the direct current bus voltage. The direct current bus voltage and the direct current bus voltage reference value are differenced and compared in the comparator to obtain the bus voltage difference. Then, the bus voltage difference is transmitted to the PI regulator for PI adjustment, and the second target duty cycle is output. Finally, the PWM signal generator generates a corresponding second switching signal in combination with the second target duty cycle and sends it to the first switching device Q1, to control the on-off of the first switching device Q1 with the switching signal, completing the voltage stabilization control of the direct current bus 411.

In the above solution, the bus voltage difference between the direct current bus voltage reference value and the direct current bus voltage is combined, and proportional integral adjustment and pulse width modulation are sequentially performed to finally generate the second switching signal to control the operation of the second converter 612, that is, voltage stabilization control of the direct current bus 411 is achieved through the second converter 612, which has the advantage of high voltage stabilization control accuracy.

The embodiments of this application further provide an energy storage valve, including a submodule controller and the above new energy storage submodule. The submodule controller is in communication connection with the new energy storage submodule, and each new energy storage submodule is cascaded.

The submodule controller is used to execute the steps of the operation method of any one of the above new energy storage submodules. The specific structure of the new energy storage submodule and the implementation of the operation method thereof are as shown in the above embodiments and the accompanying drawings, which will not be repeated here. In actual scenarios, each new energy storage submodule of the energy storage valve can be connected to a corresponding submodule controller, that is, each submodule controller separately controls the operation of the new energy storage submodule in communication connection with it. In other embodiments, one submodule controller can also be selected to control the operation of two or more new energy storage submodules simultaneously according to actual needs, which is not specifically limited.

It should be noted that after cascading the new energy storage submodules, they can be connected to an alternating current grid or a direct current grid. In the case of connecting to an alternating current grid, they can be connected to the alternating current grid in a manner similar to FIG. 2 and FIG. 3, where the submodules of SM# include new energy storage submodules. In the case of connecting to a direct current grid, after cascading the new energy storage submodules, two ends are connected to the positive and negative lines of the direct current grid respectively. In addition, the new energy storage submodules can also be mixed with energy storage submodules and photovoltaic submodules into an alternating current grid or a direct current grid to better match various demands of the grid.

In the solution of the embodiments of this application, each cascaded new energy storage submodule distributes the new energy assembly 419 in each new energy storage submodule, modularizing the new energy assembly 419, which has good flexibility, can reduce the impact of a single failure of the new energy assembly 419 on the new energy grid-connected system, that is, in the case that a single new energy assembly 419 fails, the new energy storage submodule where the failed new energy assembly is located can be removed without greatly affecting the operation of other new energy assemblies 419, increasing the proportion of operation time of the new energy grid-connected system, thereby effectively improving the system availability of the new energy grid-connected system.

It should be noted that the new energy storage submodule provided by this application can not only be used to form a direct current type energy storage valve in the above cascaded manner, but also form an alternating current energy storage valve, which is not limited and can be selected according to actual needs.

Embodiments of this application further provide an energy storage system, including a converter valve and the above energy storage valve. A first end and a second end formed after cascading each new energy storage submodule are connected to the converter valve respectively, and the converter valve is configured to connect to an alternating current grid.

The cascaded new energy storage submodules in the energy storage valve are as shown in the above embodiments and the accompanying drawings, which will not be repeated here. In the solution of the embodiments of this application, the converter valve can include at least one of a voltage source converter valve, a line commutated converter valve, and a cascaded converter valve.

The type of the converter valve is not unique, as long as it is a device capable of achieving rectification and inversion functions, which can be set according to actual needs. For example, in some embodiments, the converter valve includes a line commutated converter valve or a VSC converter valve. In some embodiments, the VSC converter valve can alternatively be two single-level converters, three-level converters, or a modular multilevel converter valve as shown in FIG. 2, which is not specifically limited. In other embodiments, the converter valve can alternatively adopt a cascaded converter valve as shown in FIG. 3, which can be set according to actual needs.

Through this solution, the new energy assemblies 419 are distributedly arranged in each new energy storage submodule, modularizing the new energy assemblies 419, which has good flexibility, can reduce the impact of a single failure of the new energy assembly 419 on the new energy grid-connected system. That is, in the case that a single new energy assembly 419 fails, the new energy storage submodule where the failed new energy assembly is located can be removed without greatly affecting the operation of other new energy assemblies 419, increasing the proportion of operation time of the new energy grid-connected system, thereby effectively improving the system availability of the new energy grid-connected system.

Referring to FIG. 14, the embodiments of this application further provide an operation method based on the above energy storage system, including step 132 and step 134.

Step 132: In a case that the new energy assembly has output, acquire a new energy output power of the new energy assembly and a system demand power of the alternating current grid.

Step 134: Control the new energy assembly to output electric energy according to the new energy output power and the system demand power.

The structure of the energy storage system is as shown in the above embodiments and the accompanying drawings. The new energy output power is the sum of the output powers of the new energy assemblies 419 in each new energy storage submodule where new energy output exists. The system demand power is the sum of the demand powers of each power-consuming device in the alternating current grid, which is obtained by statistical analysis of the alternating current grid and transmitted to the system controller.

In the solution of this embodiment, the energy storage system includes the above energy storage valve, converter valve, and control device. The energy storage valve and the converter valve are connected to the control device respectively. During the operation of the energy storage system, after the control device acquires the new energy output power and the system demand power, it achieves electric energy supply to the alternating current grid in combination with the magnitude relationship between the two. It should be noted that the overall logic of the energy storage system operation control should follow the principle of prioritizing the satisfaction of the alternating current grid, that is, in the case that the new energy output power is surplus, the excess electric energy is transmitted to the energy storage module 415 for storage.

In the operation method of the above energy storage system, the output electric energy control of the new energy assembly 419 is achieved in combination with the new energy output power of the new energy assembly 419 and the system demand power of the alternating current grid, smoothing the grid output, achieving high integration of new energy power generation, grid connection, and energy storage, and improving the grid-connected operation reliability of the energy storage system.

In some embodiments, step 134 includes: in a case that the new energy output power is greater than the system demand power, controlling the new energy assembly to output electric energy to the alternating current grid and the energy storage module; in a case that the new energy output power is equal to the system demand power, controlling the new energy assembly to output electric energy to the alternating current grid; and in a case that the new energy output power is less than the system demand power, controlling both the new energy assembly and the energy storage module to output electric energy to the alternating current grid.

In the solution of this embodiment, if the new energy output power is > system demand power, after the output power of the new energy assembly 419 satisfies the demand of the alternating current grid, the remaining output power will be supplied to the energy storage module 415 to charge the energy storage module 415. In this case, the control device conducts the connection between each new energy assembly 419 and the alternating current grid (which can be achieved by turning on the new energy inverter), to transmit the electric energy generated by the new energy assembly 419 to the alternating current grid. In the case that the demand of the alternating current grid is satisfied, the control device conducts the connection between the remaining new energy assembly 419 and the energy storage module 415. Specifically, if only the first converter 417 is provided, the first converter 417 is controlled to be turned on. If both the first converter 417 and the second converter 612 are provided, both the first converter 417 and the second converter 612 need to be controlled to be turned on for operation.

It can be understood that in some embodiments, in a case that the new energy output power is > system demand power, in combination with the electric quantity of the energy storage module 415 in each new energy storage submodule, the control device can prioritize controlling the new energy assembly 419 in the same new energy storage submodule as the energy storage module 415 which has a higher electric quantity to be connected to the alternating current grid for operation, and the remaining new energy assembly 419 charges the energy storage module 415 with lower electric quantity, further improving the operation reliability of the energy storage system.

If the new energy output power equals the system demand power, the power output by the new energy assembly 419 in this case is just used by the alternating current system. Therefore, it is only necessary to control the new energy assemblies 419 in each new energy storage submodule to be connected to the alternating current grid for operation. In this case, the energy storage module 415 neither charges nor discharges.

If the new energy output power is < system demand power, the output power of the new energy assembly 419 cannot satisfy the demand of the alternating current grid in this case. It is necessary to control part or all of the energy storage modules 415 of the new energy storage submodules to provide electric energy to the alternating current grid. That is, part or all of the energy storage modules 415 discharge in this case.

In the above solution, according to the magnitude relationship between the new energy output power and the system demand power, the power transmission of the new energy assembly 419 and the charging and discharging control of the energy storage module 415 are performed, effectively improving the operation efficiency of the energy storage system.

In some embodiments, the operation method of the energy storage system further includes: in a case that the new energy assembly 419 has no output, controlling the energy storage module 415 to output electric energy to the alternating current grid.

The new energy assembly 419 having no output means that in the energy storage system, none of the new energy assemblies 419 has electric energy output, that is, the new energy assembly 419 does not perform power supply conversion (which can be due to failure, shutdown, nighttime scenario, or the like of the new energy assembly 419). In this case, to satisfy the power demand of the alternating current grid, it is necessary to control part or all of the energy storage modules 415 of the new energy storage submodules to discharge in combination with the system demand power.

In the above solution, in the case that the new energy assembly 419 has no output, the alternating current grid is powered by the energy storage module 415 to satisfy the load demand of the alternating current grid, improving the functional reliability of the energy storage system for the alternating current grid.

In some embodiments, the operation method of the energy storage system further includes: in a case of bypassing the new energy storage submodule, disconnecting the electric energy transmission between the new energy assembly 419 and the energy storage module 415.

Bypassing the new energy storage submodule means cutting out the new energy storage submodule from the energy storage system. To improve the operation safety of the new energy storage submodule, it is necessary to disconnect the electric energy transmission between the new energy assembly 419 and the energy storage module 415. Cutting out means short-circuiting the grid connection side of the power module 413 to short-circuit the new energy storage submodule, so that the new energy storage submodule is no longer connected to the energy storage system and no longer interacts power with the grid, but does not affect other new energy storage submodules being connected to the energy storage system to interact power with the grid.

It should be noted that the manner of disconnecting the electric energy transmission between the new energy assembly 419 and the energy storage module 415 is not unique. In some embodiments, if the new energy storage submodule only includes the first converter 417, it is only necessary to disconnect the first converter 417. In other embodiments, if the new energy storage submodule includes the first converter 417 and the second converter 612, the electric energy transmission between the new energy assembly 419 and the energy storage module 415 can be interrupted by disconnecting at least one of the first converter 417 and the second converter 612.

In the above solution, in the case of bypassing the new energy storage submodule, the electric energy transmission from the new energy assembly 419 to the energy storage module 415 is interrupted, improving the operation safety of the energy storage module 415.

In some embodiments, the operation method of the energy storage system further includes: in a case that the energy storage module 415 is fully charged, disconnecting the electric energy transmission between the new energy assembly 419 and the energy storage module 415; and in a case that the discharge of the energy storage module 415 reaches a preset electric quantity threshold, conducting electric energy transmission between the new energy assembly 419 and the energy storage module 415.

"Fully charged" means that the electric quantity of the energy storage battery pack S in the energy storage module 415 reaches a preset full charge threshold. In the solution of the embodiments, if the new energy assembly 419 transmits electric energy to the energy storage module 415 to charge the energy storage module 415, the control device will acquire the electric quantity of the energy storage module 415 in real time (which can be acquired through the battery management system of the energy storage battery pack S) for analysis. In a case that the electric quantity of the energy storage battery pack S reaches the preset full charge threshold, the first converter 417 is controlled to stop operating to interrupt the charging of the energy storage module 415. Then, the control device continues to monitor the electric quantity of the energy storage module 415. If it is found that the discharge of the energy storage module 415 causes the electric quantity to reach a preset electric quantity threshold, the first converter 417 can be controlled to turn on to charge the energy storage module 415 again.

In the above solution, in the case that the energy storage module 415 is fully charged, the electric energy transmission from the new energy assembly 419 to the energy storage module 415 is interrupted, reducing the possibility of overcharging of the energy storage module 415 and improving the charging safety of the energy storage module 415.

To facilitate understanding of the technical solution of this application, this application is explained below in combination with relatively detailed embodiments.

Referring to FIG. 1 to FIG. 8, the main topology of the energy storage system includes a converter valve, a direct current direct-hang type energy storage valve, and a control device. The direct current direct-hang type energy storage valve includes cascaded new energy storage submodules, each new energy storage submodule is provided with a corresponding submodule controller, and each submodule controller is connected to the control device.

In the new energy storage submodule, a new energy assembly 419 is arranged on an insulation support assembly and set up on a placement platform (ground) through the insulation support assembly. The new energy assembly 419 is connected to a direct current bus 411 between a power module 413 and a second converter 612 through a first converter 417, and an energy storage module 415 is connected to the second converter 612. Specifically, the direct current bus 411 includes a first end direct current bus and a second end direct current bus. A bidirectional non-isolated direct current converter includes a first inductor L1 and a first switching device Q1. A first end of the first inductor L1 is connected to a first end of the first switching device Q1 and the first end direct current bus. A second end of the first inductor L1 is connected to the energy storage module 415. A second end of the first switching device Q1 is connected to the second end direct current bus and the energy storage module 415. A third end of the first switching device Q1 is connected to the submodule controller.

The first converter 417 uses a non-isolated direct current converter, including a first capacitor C1, a second inductor L2, and a second switching device Q2. A first end of the first capacitor C1 is connected to the new energy assembly 419 and a first end of the second inductor L2. A second end of the second inductor L2 is connected to a first end of the second switching device Q2 and the first end direct current bus. A second end of the first capacitor C1 is connected to the new energy assembly 419 and a second end of the second switching device Q2. The second end of the second switching device Q2 is also connected to the second end direct current bus. A third end of the second switching device Q2 is connected to the submodule controller.

The processing logic of the control device under normal operation:
(1) If the new energy output power is > system demand power, the new energy assembly 419 outputs power to the alternating current grid and the energy storage module 415, and the energy storage module 415 charges in this case (satisfying the power demand of the alternating current grid needs to be prioritized in this case).
(2) If the new energy output power is = system demand power, the new energy assembly 419 outputs power to the alternating current grid, and the energy storage module 415 neither charges nor discharges.
(3) If the new energy output power is < system demand power, the new energy assembly 419 and the energy storage module 415 output power to the alternating current grid, and the energy storage module 415 discharges.
(4) If the new energy assembly 419 has no output, output is performed by the energy storage module 415 to match the load demand of the alternating current grid in real time.

The processing logic of the control device in special cases:
(1) If the new energy storage submodule fails and bypasses, the new energy power output of the module is closed through the first converter 417.
(2) If the energy storage module 415 is fully charged, the new energy power output of the module is closed through the first converter 417 and/or the second converter 612, the energy storage module 415 discharges, and after the discharge reaches a certain threshold, the new energy assembly 419 is reconnected.

In the new energy grid-connected system, it is necessary to achieve maximum power point tracking control and constant direct current voltage control simultaneously. In a case that only the first converter 417 is present: For MPPT control, it can be achieved by the boost converter (that is, the first converter 417) connected to the new energy assembly 419. The specific implementation method is: the submodule controller acquires the direct current bus 411 current I_PV (that is, output current) of the new energy assembly 419, the voltage U_PV of the second capacitor (that is, output voltage of the new energy assembly 419), uses the MPPT algorithm to find the voltage that can achieve the maximum power output of the new energy assembly 419 in this case, and outputs it as the reference voltage U_ref. An error is obtained by comparing the output reference voltage with the voltage U_PV and then input to the PI regulator. The output of the PI regulator is the first target duty cycle, and after PWM modulation, the first switching signal is generated to achieve voltage closed-loop control of the boost converter, thereby achieving MPPT control of the new energy assembly 419. For voltage stabilization control of the direct current bus 411, direct current voltage clamping can be achieved directly through parallel connection of voltages of the energy storage battery packs S in the energy storage module 415.

In a case that both the first converter 417 and the second converter 612 are present: The MPPT control is the same as above, and achieved through the boost converter connected to the new energy assembly 419. The direct current bus voltage stabilization can be achieved through the boost converter (second converter 612). The specific implementation method is: the submodule controller acquires the given direct current bus voltage reference value U_dc_ref, differences it with the acquired voltage of the direct current support capacitor C (direct current bus voltage) to obtain a bus voltage error, and inputs it to the PI regulator. The output value of the PI regulator is the second target duty cycle of the boost converter connected to the energy storage module 415. After PWM modulation, the second switching signal is generated to achieve voltage closed-loop control of the direct current support capacitor C, thereby achieving direct current bus voltage stabilization control.

Finally, it should be noted that: the above embodiments are only used to illustrate the technical solutions of this application, and are not intended to limit them; although this application has been described in detail with reference to the foregoing embodiments, those of ordinary skill in the art should understand that: the technical solutions recorded in the foregoing embodiments can still be modified, or some or all of the technical features can be equivalently replaced. These modifications or replacements do not make the essence of the corresponding technical solutions depart from the scope of the technical solutions of the embodiments of this application, and they should all be covered within the scope of the claims and specification of this application. In particular, as long as there is no structural conflict, the various technical features mentioned in the various embodiments can be combined in any manner. This application is not limited to the specific embodiments disclosed in the text, but includes all technical solutions falling within the scope of the claims.

## Claims

1. A new energy storage submodule, comprising:
a direct current bus;
a power module comprising a grid connection side and a direct current side, wherein the grid connection side of the power module is configured to cascade with an adjacent new energy storage submodule;
an energy storage module connected to the direct current side of the power module through the direct current bus;
a first converter connected to the direct current bus; and
a new energy assembly connected to the first converter.

2. The new energy storage submodule according to claim 1, wherein the new energy storage submodule further comprises a second converter, and the second converter is arranged between the direct current bus and the energy storage module, and connected to both the direct current bus and the energy storage module.

3. The new energy storage submodule according to claim 2, wherein the second converter comprises a bidirectional non-isolated direct current converter or a bidirectional isolated direct current converter.

4. The new energy storage submodule according to any one of claims 1 to 3, wherein the new energy storage submodule further comprises an insulation support assembly, and the new energy assembly is arranged on the insulation support assembly.

5. The new energy storage submodule according to claim 4, wherein the first converter comprises a non-isolated direct current converter.

6. The new energy storage submodule according to any one of claims 1 to 3, wherein the first converter comprises an isolated direct current converter.

7. The new energy storage submodule according to claim 1, wherein the new energy storage submodule further comprises a third converter, and the third converter is arranged between the direct current bus and the power module, and connected to both the direct current bus and the direct current side of the power module.

8. The new energy storage submodule according to any one of claims 1 to 7, wherein the new energy assembly comprises a photovoltaic assembly.

9. An operation method based on the new energy storage submodule according to any one of claims 1 to 8, comprising:
in a case that an electric energy storage condition is satisfied, converting electric energy output by the new energy assembly through the first converter and then transmitting it to the energy storage module for storage; and
in a case that an electric energy supply condition is satisfied, converting electric energy output by the new energy assembly through the first converter and the power module and then transmitting it to a grid for load power supply.

10. The method according to claim 9, wherein the operation method of the new energy storage submodule further comprises:
acquiring output electrical parameters of the new energy assembly;
determining a target output voltage of the new energy assembly during maximum power operation according to the output electrical parameters; and
controlling operation of the first converter according to the output electrical parameters and the target output voltage.

11. The method according to claim 10, wherein the output electrical parameters comprise an output voltage and an output current, and the determining a target output voltage of the new energy assembly during maximum power operation according to the output electrical parameters comprises:
performing maximum power point tracking control according to the output voltage and the output current to determine the target output voltage of the new energy assembly during maximum power operation; and
the controlling operation of the first converter according to the output electrical parameters and the target output voltage comprises: controlling operation of the first converter according to the output voltage and the target output voltage.

12. The method according to claim 11, wherein the controlling operation of the first converter according to the output voltage and the target output voltage comprises:
comparing the output voltage and the target output voltage to determine an output voltage difference;
performing proportional integral adjustment according to the output voltage difference to determine a first target duty cycle; and
performing pulse width modulation according to the first target duty cycle to generate a first switching signal and send it to the first converter.

13. The method according to any one of claims 9 to 12, wherein the operation method of the new energy storage submodule further comprises:
acquiring a direct current bus voltage reference value and a direct current bus voltage; and
performing voltage stabilization control on the direct current bus according to the direct current bus voltage reference value and the direct current bus voltage.

14. The method according to claim 13, wherein the performing voltage stabilization control on the direct current bus according to the direct current bus voltage reference value and the direct current bus voltage comprises:
comparing the direct current bus voltage reference value and the direct current bus voltage to determine a bus voltage difference;
performing proportional integral adjustment according to the bus voltage difference to determine a second target duty cycle; and
performing pulse width modulation according to the second target duty cycle to generate a second switching signal and send it to a second converter.

15. An energy storage valve comprising a submodule controller and the new energy storage submodule according to any one of claims 1 to 8, wherein the submodule controller is in communication connection with the new energy storage submodule, and all new energy storage submodules are cascaded.

16. An energy storage system comprising a converter valve and the energy storage valve according to claim 15, wherein a first end and a second end formed after cascading all the new energy storage submodules are both connected to the converter valve, and the converter valve is configured to connect to an alternating current grid.

17. The energy storage system according to claim 16, wherein the converter valve comprises at least one of a voltage source converter valve, a line commutated converter valve, and a cascaded converter valve.

18. An operation method based on the energy storage system according to any one of claims 16 and 17, comprising:
in a case that the new energy assembly has output, acquiring a new energy output power of the new energy assembly and a system demand power of the alternating current grid; and
controlling the new energy assembly to output electric energy according to the new energy output power and the system demand power.

19. The method according to claim 18, wherein the controlling the new energy assembly to output electric energy according to the new energy output power and the system demand power comprises:
in a case that the new energy output power is greater than the system demand power, controlling the new energy assembly to output electric energy to the alternating current grid and the energy storage module;
in a case that the new energy output power is equal to the system demand power, controlling the new energy assembly to output electric energy to the alternating current grid; and
in a case that the new energy output power is less than the system demand power, controlling both the new energy assembly and the energy storage module to output electric energy to the alternating current grid.

20. The method according to claim 18 or 19, wherein the operation method of the energy storage system further comprises:
in a case that the new energy assembly has no output, controlling the energy storage module to output electric energy to the alternating current grid.

21. The method according to any one of claims 18 to 20, wherein the operation method of the energy storage system further comprises:
in a case of bypassing the new energy storage submodule, disconnecting electric energy transmission between the new energy assembly and the energy storage module.

22. The method according to any one of claims 18 to 21, wherein the operation method of the energy storage system further comprises:
in a case that the energy storage module is fully charged, disconnecting electric energy transmission between the new energy assembly and the energy storage module; and
in a case that discharge of the energy storage module reaches a preset electric quantity threshold, conducting electric energy transmission between the new energy assembly and the energy storage module.
